# NEUE EUROPÄISCHE PATENTSCHRIFT

(11) **EP 2 295 921 B2**
(45) Veröffentlichungstag und Bekanntmachung des Hinweises auf die Entscheidung über den Einspruch: **19.01.2022**
(45) Hinweis auf die Patenterteilung: 16.01.2019
(21) Anmeldenummer: 10170777.6
(22) Anmeldetag: 26.07.2010
(51) Int. Cl.: F28D 21/00, F28F 9/02, F16L 23/04, F02B 29/04

(54) **Wärmetauscher mit Dichtfläche und Spannfläche aufweisenden Anschlussabschnitt**
Heat exchanger comprising connecting section with sealing and tensioning surface
Echangeur thermique comprenant une partie de raccordement avec une surface d'étanchéité et une surface de tendre

(30) Priorität: 30.07.2009 DE 102009035674
(43) Veröffentlichungstag der Anmeldung: 16.03.2011
(73) Patentinhaber: MAHLE Behr GmbH & Co. KG, 70469 Stuttgart (DE)
(72) Erfinder: Herber, Achim, 71665 Vaihingen an der Enz (DE)
(74) Vertreter: Grauel, Andreas

(56) Entgegenhaltungen:
- EP-A1- 1 367 253
- EP-A1- 1 443 186
- EP-A2- 0 856 696
- DE-A1- 19 833 302
- DE-A1-102006 004 249
- DE-U1- 9 315 921
- DE-U1- 9 416 421
- US-A1- 2003 070 793
- US-A1- 2006 278 377

## Beschreibung

Die Erfindung betrifft einen Wärmetauscher, zum Wärmetausch zwischen einem Arbeitsfluid einerseits und einem Kühlfluid andererseits, mit einem Wärmetauscherkern zur Umsetzung des Wärmetausches. Die Erfindung betrifft auch ein Wärmetauschersystem.

Wärmetauscher der eingangs genannten Art werden insbesondere als Gaskühler im Rahmen eines Aufladesystems für eine Brennkraftmaschine eingesetzt. Arbeitsfluid in Form von Gas kann als Abgas und/oder eine Ladeluft der Brennkraftmaschine, komprimiert und gekühlt, eingangsseitig der Brennkraftmaschine wieder zugeführt werden Aufladesysteme, insbesondere Abgasrückführsysteme solcher Art, dienen neben einer Leistungssteigerung der Brennkraftmaschine auch der Schadstoffreduktion, insbesondere der Stickoxidreduktion, in den an die Umgebung abgegebenen Abgasen.

Ein Wärmetauscherblock weist zur Umsetzung des Wärmetausches regelmäßig einen Kern zur voneinander getrennten und wärmetauschenden Führung des Arbeitsfluids und des Kühlfluids auf sowie ein den Kern aufnehmendes, von dem Kühlfluid durchströmbares Gehäuse. Zum Anschluss des Wärmetauscherblocks an eine Anschlussleitung ist es bislang üblich, das Gehäuse desselben, mit einer Flanschplatte zu versehen. Eine solche Flanschplatte wird üblicherweise an das Gehäuse angeschweißt und ist regelmäßig aus einem hochwertigen Material, wie beispielsweise Edelstahl, gefertigt. Ein Anschlussflansch der Anschlussleitung dient zur Anbindung an die Flanschplatte, ggf. mit einem Dichtelement. Der Anschlussflansch wird regelmäßig an die Flanschplatte geschraubt. Ein derartiger Wärmetauscher ist beispielsweise in der EP 1 367 253 A1 gezeigt.

Diese Art der Anbindung eines Wärmetauscherblocks an die Anschlussleitung hat sich bewährt, ist gleichwohl vergleichsweise aufwändig. Zum einen ist der Schweißprozess aufwändig und kann thermische Spannungen im Material induzieren, sodass regelmäßig eine Dimensionskontrolle erforderlich ist. Zum anderen sind Anschlussteile der Anschlussleitung, wie beispielsweise ein Diffusor oder ein Stutzen der Anschlussleitung, separat zu fertigen. Dazu müssen entsprechende separate Werkzeuge zur Verfügung stehen. Die Montage der Anschlussleitung sowie etwaiger Anschlussteile der Anschlussleitung hat, wie erläutert, in einem separaten Prozessschritt zu erfolgen.

Wünschenswert wäre, bei weiterhin qualitativ guter Anbindung von Wärmetauscher und Anschlussleitung, die Prozessschritte bei der Fertigung zu vereinfachen, insbesondere kostengünstiger zu realisieren.

An dieser Stelle setzt die Erfindung an, deren Aufgabe es ist, einen Wärmetauscher anzugeben, welcher sich vergleichsweise einfach und dennoch verlässlich an eine Anschlussleitung anbinden lässt. Insbesondere soll ein Wärmetauscher einfacher und, soweit möglich, kostengünstiger aufgebaut bzw. herstellbar sein.

Die Aufgabe wird durch die Erfindung mittels einem Wärmetauscher der eingangs genannten Art gelöst, bei dem erfindungsgemäß der Wärmetauscherblock zum Anschluss an eine Anschlussleitung einen an der Anschlussseite angeordneten endseitigen Abschnitt mit einer Leiste aufweist, welche eine Dichtfläche und eine Spannfläche aufweist, wobei die Spannfläche als Angriffsfläche für ein Spannelement und die Dichtfläche als Anlagefläche für die Anschlussleitung ausgebildet ist.

Ein Wärmetauscher gemäß der Erfindung findet insbesondere Verwendung als Abgaskühler zur Abgaskühlung in einem Abgasrückführsystem und/oder als Ladeluftkühler in einem Ladeluftzuführsystem. In beiden Fällen ist ein Wärmetauscher gemäß der Erfindung vorzugsweise als ein Gaskühler ausgebildet.

Vorzugsweise weist der Wärmetauscherblock einen Kern zur voneinander getrennten und wärmetauschenden Führung des Arbeitsfluids und des Kühlfluids sowie ein den Kern aufnehmendes, von dem Kühlfluid durchströmbares Gehäuse auf. Gemäß dem Konzept der Erfindung ist das Gehäuse und/oder der Kern zum Anschluss an die Anschlussleitung ausgebildet. Mit anderen Worten weist das Gehäuse und/oder der Kern - z.B. ein Boden des Kerns - einen an der Anschlussseite angeordneten endseitigen Abschnitt mit einer Leiste auf, welche eine Dichtfläche und eine Spannfläche aufweist, wobei die Spannfläche als Angriffsfläche für ein Spannelement und die Dichtfläche als Anlagefläche für die Anschlussleitung ausgebildet ist.

Insbesondere eignet sich ein die Strömungskanäle aufnehmender Boden des Kerns zur Anbringung der Leiste. Ein Boden ist mit einer Anzahl von Öffnungen versehen, in denen endseitige Abschnitte der Strömungskanäle aufgenommen sind. Eine Öffnung kann beispielsweise in Form eines Durchzugs für einen Strömungskanal gebildet sein.

Die Erfindung geht von der Überlegung aus, dass die Anbindung einer Anschlussleitung über einen Flansch, wie es bisher im Stand der Technik üblich ist - insbesondere für bestimmte Belastungen in der Anschlussleitung - durch eine einfachere Lösung ersetzt werden kann. Die Erfindung hat erkannt, dass ein an der Anschlussseite angeordneter endseitiger Abschnitt mit einer Leiste, die eine Dichtfläche und eine Spannfläche aufweist, einfach zu realisieren ist und gleichwohl eine sichere Anbindung der Anschlussleitung erlaubt. Dies gilt insbesondere für eine, vorzugsweise V-förmige. Anordnung der Spannfläche und Dichtfläche. Dies ermöglicht es, einem gleichzeitig an der Spannfläche und einer Anschlussspannfläche der Anschlussleitung angreifenden Spannelement eine Anschlussdichtfläche der Anschlussleitung auf die Dichtfläche der Leiste zu pressen. Dadurch wird die Anschlussleitung sicher und dennoch einfach an den Wärmetauscherblock angeschlossen.

Dementsprechend führt das Konzept der Erfindung zur Lösung der Aufgabe auch auf ein Wärmetauschersystem mit einem vorgenannten Wärmetauscher und einer Anschlussleitung, wobei die Anschlussleitung einen an der Anschlussseite angeordneten endseitigen Abschnitt mit einer Anschlussleiste aufweist, weiche eine Anschlussdichtfläche und eine Anschlussspannfläche aufweist. Erfindungsgemäß ist dabei vorgesehen, dass die Anschlussspannfläche als Angriffsfläche für das Spannelement und die Anschlussdichtfläche als Anlagefläche für den Wärmetauscherblock ausgebildet ist.

Das Spannelement kann beispielsweise als Schelle, Klemme oder sonstiges geeignetes Mittel zum dichtenden aneinanderhalten - also unter Spannung - des Wärmetauscherstocks und der Anschlussleitung ausgebildet sein. Dadurch wird ein Aneinanderpressen der Dichtfläche und der Anschlussdichtfläche über die Spannfläche und die Anschlussspannfläche ermöglicht. Die Dichtfläche des Wärmetauscherblocks und die Anschlussdichtfläche der Anschlussleitung können, soweit technisch realisierbar, ohne ein separates Dichtelement gasdicht aneinander gepresst werden. In dieser Ausführung eignet sich ein Wärmetauscher, insbesondere Gaskühler, vorzugsweise als ein Niederdruckwärmetauscher. Ein Niederdruckwärmetauscher kann in einem Niederdruckbereich eines Aufladesystems verwendet werden. Insbesondere bei Einsatz eines Dichtelements zwischen der Dichtfläche und der Anschlussdichtfläche kann ein Wärmetauscher bzw. ein Wärmetauschersystem gemäß dem Konzept der Erfindung auch in einem Hochdruckteil eines Aufladesystems eingesetzt werden.

Unter einer Anschlussleitung kann, im vorliegenden Fall, jedes Anschlussteil verstanden werden, das im Rahmen eines Aufladesystems zum Anschluss an einen Wärmetauscher nützlich ist. Insbesondere kann eine Anschlussleitung in Form eines Anschlussstutzens gebildet sein, insbesondere in Form eines Anschlussstutzens mit Diffusor. Ein Diffusor dient insbesondere dazu, eine gleichmäßige Anströmung der Strömungskanäle im Kern des Wärmetauscherblocks zu gewährleisten. Dies wird insbesondere relevant, wenn die Anschlussleitung im übrigen Bereich einen kleineren Querschnitt aufweist als die Anströmfläche der Anordnung der Strömungskanäle im Kern des Wärmetauscherblocks.

Es hat sich mit Vorteil herausgestellt, dass, insbesondere in einer Niederdruckanwendung des Wärmetauschers, bereits Anschlussleitungen mit vergleichsweise großem Querschnitt eingesetzt werden, sodass ggf. ein Diffusor zum Anschluss an den Wärmetauscherblock entfallen kann. Somit kann das vorliegende Konzept der Erfindung vorteilhaft genutzt werden, um eine weiterführende Anschlussleitung eines Aufladesystems ohne Diffusor direkt an einen Wärmetauscherblock anzuschließen. Die Anschlussleitung kann eine Zuführleitung oder eine Abführleitung sein.

Weitere vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Vorzugsweise ist die Leiste an einem an der Anschlussseite angeordneten endseitigen Abschnitt des Gehäuses angeordnet. Von der Weiterbildung wurde erkannt, dass das Gehäuse bereits einen vorteilhaft stabilen Aufbau und eine ausreichende Materialstärke hat, was sich zum Anschluss einer Anschlussleitung eignet. In Bezug auf einen Boden des Wärmetauscherkerns kann die Leiste in axialer Ausrichtung des Gehäuses vorteilhaft hinter einem Boden des Wärmetauscherkerns angeordnet sein. Insbesondere kann die Leiste an einem der Anschlussleiste zugewandten, distalen Ende des Gehäuses angeordnet sein. Anders ausgedrückt wird auf einer Eingangsseite des Wärmetauschers zunächst der Querschnitt der Anschlussleiste durchströmt, und anschließend tritt die Strömung des Arbeitsfluids in die im Boden gehaltenen Strömungskanäle ein. Somit wird eine vorteilhafte Strömungscharakteristik im Bereich der Anbindung der Anschlussleitung an den Wärmetauscher erreicht

Grundsätzlich kann in anderen Weiterbildungen, je nach Bedarf, die Leiste auch vor oder fluchtend zu einem Boden des Wärmetauscherkerns angeordnet sein.

In besonders bevorzugter Weise ist die Leiste außenliegend am Wärmetauscherkern, insbesondere am Gehäuse, angeordnet. Durch die außenliegende Anordnung wird vermieden, dass ein Anströmquerschnitt der Strömungskanäle durch die Leiste unnötig verringert wird. Je nach Ausführung der Leiste kann diese auch eine Diffusorwirkung bei der Anströmung der Strömungskanäle unterstützen oder ausüben. Dieser Vorteil eignet sich insbesondere für eine Niederdruckanwendung des Wärmetauschers, um einen Diffusor als separates Bauteil entbehrlich zu machen.

Die Ausführung einer Spannfläche und/oder Dichtfläche kann grundsätzlich je nach Bedarf erfolgen, soweit die Funktionalität eines Spannelements und eine Dichtigkeit der Anschlussstelle gewährleistet sind. Als besonders vorteilhaft hat sich erwiesen, dass die Spannfläche und/oder Dichtfläche schräg gegen eine Achse des Wärmetauscherblocks gestellt ist. In besonders vorteilhafter Weise sind die Spannfläche und die Dichtfläche gegeneinander gerichtet. Beispielsweise können die Spannfläche und die Dichtfläche etwa in der Form eines umgekehrten "V" gegeneinander gerichtet und außenliegend am Wärmetauscherblock angeordnet bzw. mit dem Block gebildet sein. Beispielsweise kann die Leiste einstückig oder integral mit dem Gehäuse oder einem Boden des Kerns ausgebildet werden. Hier hat sich insbesondere eine Leiste in Form einer Anschlusssicke als vorteilhaft erwiesen. Insbesondere eine nach außen gerichtete Anschlusssicke kann vergleichsweise einfach als Ausstülpung, beispielsweise des Gehäuses des Wärmetauscherblocks, hergestellt werden.

In einer anderen Variante kann die Leiste in Form eines zweischenkligen Anschlussbords gebildet sein. Insbesondere ein nach außen gerichtetes Anschlussbord lässt sich leicht durch ein nach außen gerichtetes, zweimaliges Umbiegen des distalen Endes des Gehäuses erreichen. Das zweischenkliges Anschlussboard bildet dadurch einen in etwa V-förmigen Kragen am distalen Ende des Gehäuses oder Wärmetauscherkerns.

In einer weiteren Variante kann die Leiste in Form eines zweiseitigen Anschlusswulstes gebildet sein. Ein solcher zweiseitiger Anschlusswulst ist vorteilhaft in Vollmaterialausführung außenseitig am Gehäuse oder Wärmetauscherkern angebracht. Dadurch wird dem Gehäuse bzw. dem Wärmetauscherkern aufgrund der höheren Materialansammlung zusätzlich Stabilität verliehen.

In einer nicht erfindungsgemäßen abweichenden Variante kann die Spannfläche und die Dichtfläche gleichgerichtet sein. Insbesondere ist dies der Fall, wenn die Spannfläche und die Dichtfläche zwei Seiten einer Wand, beispielsweise einer Gehäusewand, bilden. Die Leiste ist gemäß dieser Weiterbildung vorteilhaft in Form einer trichterförmigen Ausweitung des Wärmetauscherkerns gebildet.

Hinsichtlich des Wärmetauschersystems kann, im Rahmen einer besonders bevorzugten Weiterbildung einer Leiste, die Spannfläche und die Dichtfläche gegeneinander gerichtet sein und - anschlussgerecht - bei der Anschlussleiste die Anschlussspannfläche und die Anschlussdichtfläche gleichgerichtet sein. Mit anderen Worten wird eine auf der Innenseite einer trichterförmigen Aufweitung der Anschlussleitung liegende Anschlussdichtfläche auf eine außenliegende Dichtfläche gepresst und stellt so die Anbindung der Anschlussleitung zur Verfügung.

In einer dazu alternativen nicht erfindungsgemäßen Ausführungsform sind die Rollen beim Anschluss der Anschlussleitung und des Wärmetauschers vertauscht. Bei der Leiste des Wärmetauscherblocks ist die Spannfläche und die Dichtfläche gleichgerichtet, während bei der Anschlussleiste die Anschlussspannfläche und die Anschlussdichtfläche gegeneinander gerichtet sind.

Um eine vergleichsweise dichte Anbindung der Anschlussleitung auch bei fehlender Dichtung zu gewährleisten, hat es sich als vorteilhaft erwiesen, dass eine Materialstärke der Anschlussleiste dünner als die der Leiste ist.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1:: eine bevorzugte Ausführungsform eines Wärmetauschersystems mit einem Wärmetauscher und einer Leitung sowie den weiteren Verlauf der Leitung in einem vergrößerten Detail A;
- Fig. 2:: in Ansicht (A) eine schematische Teilschnittdarstellung eines Gehäuses eines Wärmetauschers gemäß einer bevorzugten Ausführungsform und in Ansicht (B) eine schematische Teilschnittdarstellung eines Wärmetauschersystems mit dem Wärmetauscher, einer Anschlussleitung und einem Spannelement gemäß einer weiteren ersten bevorzugten Ausführungsform;
- Fig. 3, Fig. 4:: abgewandelte Anordnungen einer Leiste - hier in Form einer außenliegenden, V-förmigen Anschlusssicke am distalen Ende eines Gehäuses eines Wärmetauscherblocks - in Bezug auf einen Boden des Wärmetauscherkerns für eine weitere zweite und dritte Ausführungsform eines Wärmetauschers;
- Fig. 5, Fig. 6:: Varianten einer Ausführung einer Leiste am distalen Ende eines Gehäuses eines Wärmetauscherblocks für eine weitere vierte und fünfte Ausführungsform eines Wärmetauschers und
- Fig. 7:: eine zu Fig. 2B umgekehrte Anbindung einer Anschlussleitung an ein Gehäuse für eine weitere nicht erfindungsgemäße Ausführungsform eines Wärmetauschers.

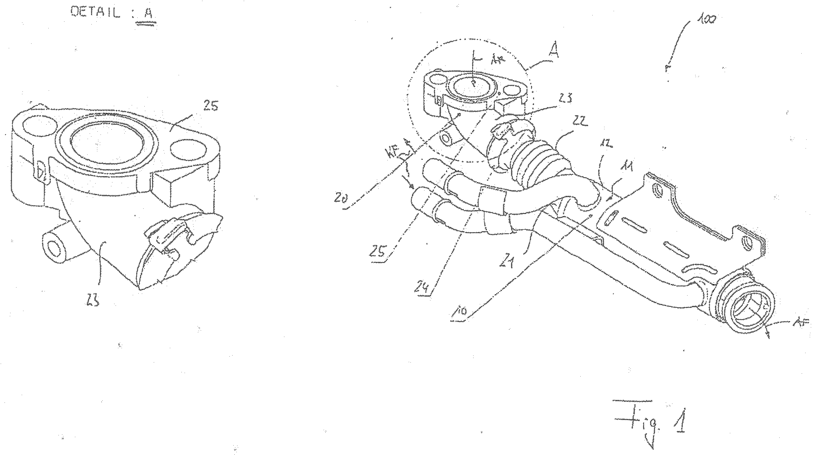

Fig. 1 zeigt ein Wärmetauschersystem 100 mit einem Wärmetauscher 10 und einer mehrteiligen Leitung 20. Der Wärmetauscher 10 weist einen Wärmetauscherblock 11 mit einem Gehäuse 12 sowie einem nicht näher dargestellten Wärmetauscherkern zur voneinander getrennten und wärmetauschenden Führung eines Arbeitsfluids AF und eines Kühlfluids KF auf. Das Arbeitsfluid AF wird über die Leitung 20 Strömungskanälen des Wärmetauscherkerns zugeführt, welche vom Kühlfluid KF in einer Kammer des Gehäuses 12 umströmt werden.

Die mehrteilige Leitung 20 weist einen Diffusor 21, ein Dehnungselement 22 in Form eines Faltenbalgs sowie einen Anschlussstutzen 23 auf, welcher im Detail A der Fig. 1 vergrößert dargestellt ist. Das Dehnungselement 22 und der Anschlussstutzen 23 sind vorliegend über eine Klemmschelle 24 miteinander verbunden. Weitere Teile der Leitung 20, die Teil eines Abgasrückführungssystems sind, können über eine am Stutzen angebrachte Flanschplatte 25 angebunden werden.

Eine Flanschplatte wird im Stand der Technik auch verwendet, um eine direkte Anschlussleitung oder andere Teile der Leitung 20, wie beispielsweise einen Diffusor 21, am Wärmetauscher 10 anzubinden.

Eine vereinfachte und insbesondere in der Herstellung leichter realisierbare Anbindung einer direkten Anschlussleitung an einen Wärmetauscher 10 ist im Rahmen der im Folgenden beschriebenen Ausführungsformen gemäß dem Konzept der Erfindung möglich.

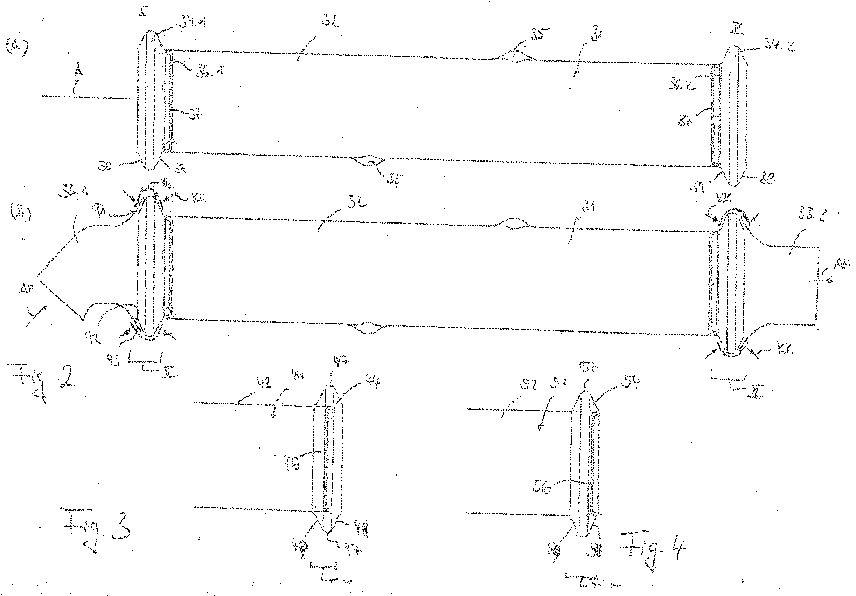

Dazu ist in Fig. 2 eine erste Ausführungsform anhand eines schematisch dargestellten Gehäuses 32 eines Wärmetauscherblocks 31 gezeigt. Das schematisch dargestellte Gehäuse 32 der Fig. 2 sowie die weiteren im Rahmen der Fig. 3 bis Fig. 7 erläuterten Gehäuse 42, 52, 62, 72 und 82 als Teil der weiter erläuterten Wärmetauscherblöcke 41, 51, 61, 71 und 81 können bei dem in Fig. 1 erläuterten Wärmetauschersystem 100 bzw. Wärmetauscher 10 anstatt des dort gezeigten Gehäuses 12 bzw. Wärmetauscherblocks 11 eingesetzt werden.

Der Wärmetauscherblock 31 der Fig. 2A weist zum Anschluss an eine in Fig. 2B dargestellte Anschlussleitung 33.1, 33.2 einen an der Anschlussseite I, II angeordneten endseitigen Abschnitt mit einer Leiste auf, die bei der Ausführungsform der Fig. 2 in Form einer nach außen gerichteten V-förmigen Anschlusssicke 34.1, 34.2 gebildet ist. Vorliegend ist sowohl eine eingangsseitige Anschlusssicke 34.1 zum Anschluss einer zuführenden Anschlussleitung 33.1 als auch eine ausgangsseitige Anschlusssicke 34.2 zum Anschluss einer abführenden Anschlussleitung 33.2 vorgesehen. Weiter ist das Gehäuse 32 in einem Bereich des Wärmetauscherkerns mit nach außen gerichteten Dehnungssicken 35 versehen, von denen vorliegend zwei beispielhaft dargestellt sind. Der nicht im Einzelnen gezeichnete Wärmetauscherkern weist eine Reihe von Strömungskanälen auf, die in einem eingangsseitigen Rohrboden 36 1 und einem ausgangsseitigen Rohrboden 36.2 gehalten sind. Ein Rohrboden 36.1, 36.2 weist dazu eine der Anzahl von Strömungskanälen entsprechende Anzahl von Öffnungen 37 auf, die vorliegend als Durchzug, ggf. mit Kragen zur verbesserten Haltung der Strömungskanäle, im Rohrboden 36.1, 36.2 ausgebildet sind. Eine Anschlusssicke 34.1, 24.2 ist gemäß der in Fig. 2 dargestellten Ausführungsform hinter einem Rohrboden 36.1, 36.2 eines Wärmetauscherkerns angeordnet, d.h. mit anderen Worten, der endseitige Abschnitt I, II ist vorliegend außerhalb des Bereichs des Wärmetauscherkerns angeordnet.

Eine Anschlusssicke 34.1, 34.2 weist zur Ausübung ihrer Anschlussfunktion eine Dichtfläche 38 und eine Spannfläche 39 auf, die schräg gegen eine Achse A des Gehäuses 32 und zur Bildung einer V-Form schräg gegeneinander gerichtet sind. Eine Anschlusssicke 34.1, 34 2 bildet mit ihrer Dichtfläche 38 ein distales Ende des Gehäuses 32 und fluchtet mit der auslaufenden Spannfläche 39 im Wesentlichen mit einem Rohrboden 36.1, 36.2.

Es hat sich gezeigt, dass durch diese Anordnung einer Anschlusssicke 34.1, 34.2 hinsichtlich ihrer axialen Position zu einem Rohrboden 36.1, 36.2 eine besonders vorteilhafte Einströmcharakteristik des Arbeitsfluids AF von einer Anschlussleitung 33.1, 33.2 in das Gehäuse 32 erreichbar ist.

Wie aus Fig. 2B ersichtlich ist, lässt sich eine Zuführleitung 33.1 bzw. Abführleitung 33.2 mit einer trichterförmigen Aufweitung 91 versehen. Vorwiegend ist die Aufweitung 91 aus dünnerem Material gebildet als die Leiste des Gehäuses 32. Eine innenliegende Anschlussdichtfläche 92 der Aufweitung 91 lässt sich somit eng an die Dichtfläche 38 der Anschlusssicke 34 1, 34.2 anbringen und anschmiegen. Um die dichtende Wirkung zu erhöhen, kann ggfs. - in einer hier nicht gezeigten Ausführungsform - zwischen der Dichtfläche 38 und der Anschlussdichtfläche 92 ein Dichtelement vorgesehen sein. Insbesondere für Niederdruckanwendungen eignet sich jedoch auch die Ausführung der Aufweitung 91 mit einer Materialstärke geringer als eine Materialstärke der Anschlusssicke 34.1, 34.2. Auf diese Weise wird eine vergleichsweise gute Materialanformung der trichterförmigen Aufweitung an die Anschlusssicke 34.1, 34.2 im Bereich der Anschlussdichtfläche 92 bzw. der Dichtfläche 38 erreicht.

Ein an der Anschlussspannfläche 93 der trichterförmigen Aufweitung 91 angreifendes Spannelement 90 übt eine Klemmkraft KK auf die Spannfläche 39 und die Anschlussspannfläche 93 aus, sodass die Anschlussleitung 33.1, 33.2 dichtend an das Gehäuse 32 angeschlossen wird.

Fig. 3 und Fig. 4 zeigen Variationen des Gehäuses 32 hinsichtlich der axialen Positionierung einer Anschlusssicke 34.1, 34.2 in Bezug auf einen Rohrboden 36.1, 36.2. Fig. 3 zeigt dazu ein Gehäuse 42 eines teilweise dargestellten Wärmetauscherblocks 41, bei welchem eine wie in Fig. 2 erläutert ausgebildete und funktionierende Anschlusssicke 44 am distalen Ende des Gehäuses 42 so angeordnet ist, dass diese mit ihrem Zenit 47 zwischen Spannfläche 49 und Dichtfläche 48 im Wesentlichen mit einem Rohrboden 46 des Wärmetauscherkerns fluchtet.

Fig. 4 zeigt ein Gehäuse 52 eines Wärmetauscherblocks 51, bei dem die Anschlusssicke 54 am distalen Ende des Gehäuses 52 so angeordnet ist, dass diese am distalen Ende mit ihrer Dichtfläche 58 mit dem Rohrboden 56 des Wärmetauscherkerns fluchtet. Der Bereich des Zenits 57 und der Spannfläche 59 der Anschlusssicke 54 überlappt somit mit einem Rohrboden und einem unmittelbar daran anschließenden endseitigen Strömungskanalabschnitt des Wärmetauscherkerns. Anders ausgedrückt überlappt ein endseitiger Abschnitt I, II bei der Ausführungsform der Fig. 3 hälftig und bei der Ausführungsform der Fig. 4 vollständig mit einem endseitigen Bereich des Wärmetauscherkerns.

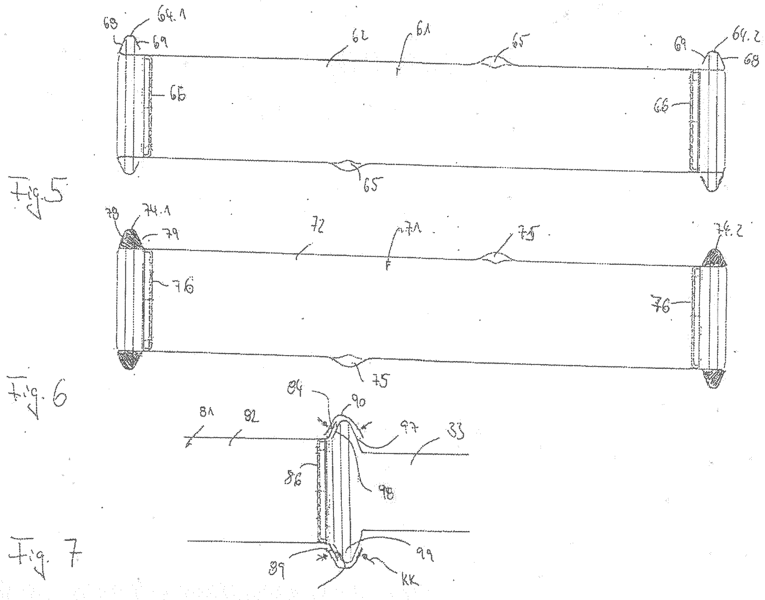

Fig. 5 zeigt eine weitere Ausführungsform eines Gehäuses 62 bei einem Wärmetauscherblock 61, wobei das Gehäuse 62 wiederum mit Dehnungssicken 65 im Bereich des Wärmetauscherkerns versehen ist. Eine in Form eines zweischenkligen Anschlussbords 64.1, 64.2 gebildete Leiste ist vorliegend nach außen gerichtet und übt eine Funktion aus, wie diese anhand der Anschlusssicke 34.1, 34.2 in Fig. 2A und Fig. 2B erläutert wurde. Die axiale Anordnung des zweischenkligen Anschlussbords 64.1, 64.2 in Bezug auf einen Rohrboden 66 entspricht dabei der Anordnung einer Anschlusssicke 34.1, 34.2 der Fig. 2A, Fig. 2B, d.h. das zweischenklige Anschlussbord 64.1, 64.2 bildet das distale Ende des Gehäuses 62 und fluchtet mit seiner Spannfläche 69 mit dem Rohrboden 66. Eine Dichtfläche 68 fluchtet mit dem distalen Ende. Die Dichtfläche 68 ergibt sich durch einmaliges Aufbiegen des Gehäuserandes. Die Spannfläche 69 ergibt sich durch zweimaliges Umbiegen des Gehäuserandes nach außen. Insgesamt entsteht das nach außen gerichtete Anschlussbord durch zweimaliges Umbiegen des Gehäuserandes nach außen.

Fig. 6 zeigt eine weitere Ausführungsform eines Gehäuses 72 bei einem Wärmetauscherblock 71, welches wiederum Dehnungselemente 75 in Form von Dehnungssicken aufweist. Bei der in Fig. 6 gezeigten Ausführungsform ist am distalen Ende eine Leiste in Form eines zweiseitigen Anschlusswulstes 74.1, 74.2 gebildet, wobei der Anschlusswulst 74.1, 74.2 eine Dichtfläche 78 und eine Spannfläche 79 aufweist. Die Anordnung des Anschlusswulstes 74.1, 74.2 in Bezug auf den Rohrboden 76 als auch die Funktion der Spannfläche 79 und der Dichtfläche 78 entspricht der Funktion der Spannfläche 39 und der Dichtfläche 38, wie anhand von Fig. 2A, Fig. 2B erläutert.

Fig. 7 zeigt eine weitere nicht erfindungsgemäße Ausführungsform eines Gehäuses 82 in Bezug auf eine Anschlussleitung 33. Dabei sind die Elemente der Anbindung bezüglich des Gehäuses 82 und der Anschlussleitung 33 in Vergleich zu Fig. 2B vertauscht. Mit anderen Worten ist an der Anschlussleitung 33 eine Anschlussleiste 99 in Form einer V-förmigen Anschlusssicke mit einer Anschlussdichtfläche 98 und einer Anschlussspannfläche 97 angeformt. Das Gehäuse 82 des Wärmetauscherblocks 81 ist am distalen Ende hinter dem Rohrboden 86 mit einer trichterförmigen Aufweitung 84 versehen und weist eine entsprechende Dichtfläche 88 und Spannfläche 89 auf. Wiederum greift vorliegend ein Spannelement 90 an die Spannfläche 89 und die Anschlussspannfläche 97 an und ermöglicht durch Ausübung einer Klemmkraft KK das dichtende Aneinanderliegen der Dichtfläche 88 und der Anschlussdichtfläche 98. Die Funktion der Anbindung ist somit identisch zu der in Fig. 2 erläuterten Funktion der Anbindung.

Zusammenfassend betrifft die Erfindung einen Wärmetauscher 10, insbesondere Gaskühler, zum Wärmetausch zwischen einem Arbeitsfluid AF einerseits, insbesondere einem Abgas und/oder einer Ladeluft, und einem Kühlfluid KF andererseits, insbesondere einem Kühlmittel, mit einem Wärmetauscherblock zur Umsetzung des Wärmetausches. Erfindungsgemäß ist dabei vorgesehen, dass der Wärmetauscherblock 11, 31, 41, 51, 61, 71, 81 zum Anschluss an eine Anschlussleitung 33, 33.1, 33.2 einen an der Anschlussseite angeordneten endseitigen Abschnitt mit einer Leiste aufweist, welche eine Dichtfläche 38, 48, 58, 68, 78, 88 und eine Spannfläche aufweist 39, 49, 59, 69, 79, 89, wobei die Spannfläche 39, 49, 59, 69, 79, 89 als Angriffsfläche für ein Spannelement 90, und die Dichtfläche 38, 48, 58, 68, 78, 88 als Anlagefläche für die Anschlussleitung 33, 33.1, 33.2 ausgebildet ist. Die Erfindung führt auch auf ein Wärmetauschersystem 100.

### Bezugszeichenliste

10 Wärmetauscher
11 Wärmetauscherblock
12 Gehäuse
20 Leitung
21 Diffusor
22 Dehnungselement
23 Anschlussstutzen
24 Klemmschelle
25 Flanschplatte
31 Wärmetauscherblock
32 Gehäuse
33 Anschlussleitung
33.1 Anschlussleitung, Zuführleitung
33.2 Anschlussleitung, Abführleitung
34.1 eingangsseitige Anschlusssicke
34.2 ausgangsseitige Anschlusssicke
35 Dehnungssicken
36.1 eingangsseitiger Rohrboden
36.2 ausgangsseitiger Rohrboden
37 Öffnungen
38 Dichtfläche
39 Spannfläche
41 Wärmetauscherblock
42 Gehäuse
44 Anschlusssicke
46 Rohrboden
47 Zenit
48 Dichtfläche
49 Spannfläche
51 Wärmetauscherblock
52 Wärmetauschergehäuse, Gehäuse
54 Anschlusssicke
56 Rohrboden
57 Zenit
58 Dichtfläche
59 Spannfläche
61 Wärmetauscherblock
62 Gehäuse
64.1 Anschlussbord
64.2 Anschlussbord
65 Dehnungssicken
66 Rohrboden
68 Dichtfläche
69 Spannfläche
71 Wärmetauscherblock
72 Gehäuse
74.1 Anschlusswulst
74.2 Anschlusswulst
75 Dehnungselemente
76 Rohrboden
78 Dichtfläche
79 Spannfläche
81 Wärmetauscherblock
82 Gehäuse
84 trichterförmige Aufweitung
86 Rohrboden
88 Dichtfläche
89 Spannfläche
90 Spannelement
91 trichterförmige Aufweitung
92 Anschlussdichtfläche
93 Anschlussspannfläche
97 Anschlussspannfläche
98 Anschlussdichtfläche
99 Anschlussleiste
100 Wärmetauschersystem

A Achse
AF Arbeitsfluid
KF Kühlfluid
KK Klemmkraft

## Patentansprüche

1. Wärmetauscher (10), insbesondere Gaskühler, zum Wärmetausch zwischen einem Arbeitsfluid (AF) einerseits, insbesondere einem Abgas und/oder einer Ladeluft, und einem Kühlfluid (KF) andererseits, insbesondere einem Kühlmittel, mit einem Wärmetauscherblock zur Umsetzung des Wärmetausches, wobei der Wärmetauscherblock (11, 31, 41, 51, 61, 71, 81) zum Anschluss an eine Anschlussleitung (33, 33.1, 33.2) einen an der Anschlussseite angeordneten endseitigen Abschnitt mit einer Leiste aufweist, welche eine Dichtfläche (38, 48, 58, 68, 78, 88) und eine Spannfläche aufweist (39, 49, 59, 69, 79, 89), wobei die Spannfläche (39, 49, 59, 69, 79, 89) als Angriffsfläche für ein Spannelement (90), und die Dichtfläche (38, 48, 58, 68, 78, 88) als Anlagefläche für die Anschlussleitung (33, 33.1, 33.2) ausgebildet ist, wobei der Wärmetauscherblock (11, 31, 41, 51, 61, 71, 81) aufweist:
- einen Wärmetauscherkern zur voneinander getrennten und wärmetauschenden Führung des Arbeitsfluids (AF) und des Kühlfluids (KF);
- ein den Wärmetauscherkern aufnehmendes, von dem Kühlfluid (KF) durchströmbares Gehäuse (12, 32, 42, 52, 62, 72, 82);
wobei das Gehäuse (12, 32, 42, 52, 62, 72, 82) und/oder der Wärmetauscherkern zum Anschluss an die Anschlussleitung (33, 33.1, 33.2) ausgebildet ist und wobei die Leiste an einem an der Anschlussseite angeordneten endseitigen Abschnitt des Gehäuses (12, 32, 42, 52, 62, 72, 82) angeordnet ist, wobei die Leiste vor, hinter oder fluchtend zu einem Boden (37, 47, 57, 67, 77, 87) des Wärmetauscherkerns angeordnet ist, **dadurch gekennzeichnet, dass** die Spannfläche (39, 49, 59, 69, 79, 89) und die Dichtfläche (38, 48, 58, 68, 78, 88) schräg gegen eine Achse (A), insbesondere Durchströmungsrichtung, des Wärmetauscherblocks (11, 31, 41, 51, 61, 71, 81) gestellt ist und die Spannfläche (39, 49, 59, 69, 79, 89) und die Dichtfläche (38, 48, 58, 68, 78, 88) gegeneinander gerichtet sind.

2. Wärmetauscher (10) nach Anspruch 1, **dadurch gekennzeichnet, dass** die Leiste außenliegend und/oder an einem der Anschlussseite zugewandten distalen Ende des Gehäuses (12, 32, 42, 52, 62, 72, 82) angeordnet ist.

3. Wärmetauscher (10) nach einem der Ansprüche 1 oder 2, **dadurch gekennzeichnet, dass** die Leiste in Form einer, vorzugsweise V-förmigen, Anschlusssicke (34.1, 34.2, 44, 54), insbesondere einer nach außen gerichteten Anschlusssicke, gebildet ist.

4. Wärmetauscher (10) nach einem der Ansprüche 1 bis 3, **dadurch gekennzeichnet, dass** die Leiste in Form eines, vorzugsweise V-förmigen, zweischenkeligen Anschlussbords (64.1, 64.2), insbesondere nach außen gerichteten Anschlussbords, gebildet ist.

5. Wärmetauscher (10) nach einem der Ansprüche 1 bis 4, **dadurch gekennzeichnet, dass** die Leiste in Form eines, vorzugsweise V-förmigen, zweiseitigen Anschlusswulstes (74.1, 74.2), insbesondere nach außen gerichteten Anschlusswulstes, gebildet ist.

6. Wärmetauschersystem (100) mit einem Wärmetauscher (10) nach einem der Ansprüche 1 bis 5 und einer Anschlussleitung (33, 33.1, 33.2), wobei die Anschlussleitung (33, 33.1, 33.2) einen an der Anschlussseite angeordneten endseitigen Abschnitt mit einer Anschlussleiste (99) aufweist, welche eine Anschlussdichtfläche (92, 98) und eine Anschlussspannfläche (93, 97) aufweist, wobei die Anschlussspannfläche (93, 97) als Angriffsfläche für ein Spannelement (90), und die Anschlussdichtfläche (92, 98) als Anlagefläche für den Wärmetauscherblock (11, 31, 41, 51, 61, 71, 81) ausgebildet ist.

7. Wärmetauschersystem (100) nach Anspruch 6, **dadurch gekennzeichnet, dass** bei der Anschlussleiste die Anschlussspannfläche (93) und die Anschlussdichtfläche (92) gleichgerichtet und bei der Leiste des Wärmetauschers (10) die Spannfläche (39, 49, 59, 69, 79, 89) und die Dichtfläche (38, 48, 58, 68, 78, 88) gegeneinander gerichtet sind.

8. Wärmetauschersystem (100) nach einem der Ansprüche 6 oder 7, **dadurch gekennzeichnet, dass** eine Materialstärke der Anschlussleiste dünner als die der Leiste ist.

## Claims

1. A heat exchanger (10), in particular a gas cooler, for the heat exchange between a working fluid (AF) on the one hand, in particular an exhaust gas and/or charge air, and a cooling fluid (KF) on the other hand, in particular a coolant, with a heat exchanger block for the realisation of the heat exchange, wherein the heat exchanger block (11, 31, 41, 51, 61, 71, 81) has an end-side section with a strip arranged on the connecting side for the connection to a connecting line (33, 33.1, 33.2), the strip having a sealing surface (38, 48, 58, 68, 78, 88) and a clamping surface (39, 49, 59, 69, 79, 89), wherein the clamping surface (39, 49, 59, 69, 79, 89) is designed as a working surface for a clamping element (90) and the sealing surface (38, 48, 58, 68, 78, 88) is designed as a contact surface for the connecting line (33, 33.1, 33.2), wherein the heat exchanger block (11, 31, 41, 51, 61, 71, 81) has:
- a heat exchanger core for the separate and heat-exchanging guidance of the working fluid (AF) and the cooling fluid (KF);
- a housing (12, 32, 42, 52, 62, 72, 82) which receives the heat exchanger core and through which the cooling fluid (KF) can flow;
wherein the housing (12, 32, 42, 52, 62, 72, 82) and/or the heat exchanger core are designed for the connection to the connecting line (33, 33.1, 33.2) and wherein the strip is arranged on an end-side section of the housing (12, 32, 42, 52, 62, 72, 82) arranged on the connecting side, wherein the strip is arranged in front of, behind or flush with a base (37, 47, 57, 67, 77, 87) of the heat exchanger core, **characterised in that** the clamping surface (39, 49, 59, 69, 79, 89) and the sealing surface (38, 48, 58, 68, 78, 88) are placed obliquely against an axis (A), in particular throughflow direction, of the heat exchanger block (11, 31, 41, 51, 61, 71, 81) and the clamping surface (39, 49, 59, 69, 79, 89) and the sealing surface (38, 48, 58, 68, 78, 88) are directed against each other.

2. The heat exchanger (10) according to claim 1, **characterised in that** the strip is arranged outside and/or on a distal end of the housing (12, 32, 42, 52, 62, 72, 82) facing the connecting side.

3. The heat exchanger (10) according to one of claims 1 or 2, **characterised in that** the strip is formed in the form of a preferably V-shaped connecting bead (34.1, 34.2, 44, 54), in particular a connecting bead directed to the outside.

4. The heat exchanger (10) according to one of claims 1 to 3, **characterised in that** the strip is formed in the form of a preferably V-shaped, two-legged connecting rim (64.1, 64.2), in particular a connecting rim directed to the outside.

5. The heat exchanger (10) according to one of claims 1 to 4, **characterised in that** the strip is formed in the form of a preferably V-shaped, two-side connecting ridge (74.1, 74.2), in particular a connecting ridge directed to the outside.

6. A heat exchanger system (100) with a heat exchanger (10) according to one of claims 1 to 5 and a connecting line (33, 33.1, 33.2), wherein the connecting line (33, 33.1, 33.2) has an end-side section with a connecting strip (99) arranged on the connecting side, the strip having a connecting sealing surface (92, 98) and a connecting clamping surface (93, 97), wherein the connecting clamping surface (93, 97) is designed as a working surface for a clamping element (90) and the connecting sealing surface (92, 98) is designed as a contact surface for the heat exchanger block (11, 31, 41, 51, 61, 71, 81) .

7. The heat exchanger system (100) according to claim 6, **characterised in that** regarding the connecting strip, the connecting clamping surface (93) and the connecting sealing surface (92) are co-directional and regarding the strip of the heat exchanger (10), the clamping surface (39, 49, 59, 69, 79, 89) and the sealing surface (38, 48, 58, 68, 78, 88) are directed against each other.

8. The heat exchanger system (100) according to one of claims 6 or 7, **characterised in that** a material strength of the connecting strip is thinner than the one of the strip.

## Revendications

1. Echangeur de chaleur (10), en particulier refroidisseur de gaz d'échappement, servant à l'échange de chaleur entre un fluide de travail (AF) d'une part, en particulier des gaz d'échappement et / ou un air de suralimentation, et un fluide de refroidissement (KF) d'autre part, en particulier un liquide de refroidissement, ledit échange de chaleur étant réalisé avec un bloc de l'échangeur de chaleur servant à la mise en œuvre de l'échange de chaleur, où le bloc (11, 31, 41, 51, 61, 71, 81) de l'échangeur de chaleur présente, pour le raccordement à une conduite de raccordement (33, 33.1, 33.2), une partie placée côté extrémité et disposée sur le côté de raccordement, ladite partie ayant un rebord qui présente une surface d'étanchéité (38, 48, 58, 68, 78, 88) et une surface de serrage (39, 49, 59, 69, 79, 89), où la surface de serrage (39, 49, 59, 69, 79, 89) est configurée comme une surface d'attaque pour un élément de serrage (90), et la surface d'étanchéité (38, 48, 58, 68, 78, 88) est configurée comme une surface d'appui pour la conduite de raccordement (33, 33.1, 33.2), où le bloc (11, 31, 41, 51, 61, 71, 81) de l'échangeur de chaleur présente :
- un noyau d'échangeur de chaleur servant à faire circuler le fluide de travail (AF) et le fluide de refroidissement (KF), séparément l'un de l'autre, et en échangeant de la chaleur ;
- un carter (12, 32, 42, 52, 62, 72, 82) logeant le noyau de l'échangeur de chaleur et pouvant être traversé par le liquide de refroidissement (KF) ;
où le carter (12, 32, 42, 52, 62, 72, 82) et / ou le noyau de l'échangeur de chaleur est conçu pour le raccordement à la conduite de raccordement (33, 33.1, 33.2), et où le rebord est disposé sur une partie du carter (12, 32, 42, 52, 62, 72, 82), ladite partie étant placée côté extrémité et disposée sur le côté de raccordement, où le rebord est disposé en étant placé devant, derrière ou de façon alignée par rapport à un fond (37, 47, 57, 67, 77, 87) du noyau de l'échangeur de chaleur,
**caractérisé en ce que** la surface de serrage (39, 49, 59, 69, 79, 89) et la surface d'étanchéité (38, 48, 58, 68, 78, 88) sont placées de façon oblique par rapport à un axe (A) du bloc (11, 31, 41, 51, 61, 71, 81) de l'échangeur de chaleur, de façon oblique en particulier par rapport à la direction de circulation des fluides, et la surface de serrage (39, 49, 59, 69, 79, 89) et la surface d'étanchéité (38, 48, 58, 68, 78, 88) sont orientées en convergeant l'une vers l'autre.

2. Echangeur de chaleur (10) selon la revendication 1, **caractérisé en ce que** le rebord est disposé en se trouvant à l'extérieur et / ou placé au niveau d'une extrémité distale du carter (12, 32, 42, 52, 62, 72, 82), ladite extrémité étant tournée vers le côté de raccordement.

3. Echangeur de chaleur (10) selon l'une des revendications 1 ou 2, **caractérisé en ce que** le rebord est configuré en ayant la forme d'une moulure de raccordement (34.1, 34.2, 44, 54), de préférence en forme de V, en particulier en ayant la forme d'une moulure de raccordement tournée vers l'extérieur.

4. Echangeur de chaleur (10) selon l'une quelconque des revendications 1 à 3, **caractérisé en ce que** le rebord est configuré en ayant la forme d'un bord de raccordement à deux branches (64.1, 64.2), de préférence en forme de V, en particulier en ayant la forme d'un bord de raccordement tourné vers l'extérieur.

5. Echangeur de chaleur (10) selon l'une quelconque des revendications 1 à 4, **caractérisé en ce que** le rebord est configuré en ayant la forme d'un bourrelet de raccordement à deux côtés (74.1, 74.2), de préférence en forme de V, en particulier en ayant la forme d'un bourrelet de raccordement tourné vers l'extérieur.

6. Système d'échangeur de chaleur (100) comprenant un échangeur de chaleur (10) selon l'une quelconque des revendications 1 à 5, et comprenant une conduite de raccordement (33, 33.1, 33.2), où la conduite de raccordement (33, 33.1, 33.2) présente une partie placée côté extrémité et disposée au niveau du côté raccordement, ladite partie ayant un rebord de raccordement (99) qui présente une surface d'étanchéité de raccordement (92, 98) et une surface de serrage de raccordement (93, 97), où la surface de serrage de raccordement (93, 97) est configurée comme une surface d'attaque pour un élément de serrage (90), et la surface d'étanchéité de raccordement (92, 98) est configurée comme une surface d'appui pour le bloc (11, 31, 41, 51, 61, 71, 81) de l'échangeur de chaleur.

7. Système d'échangeur de chaleur (100) selon la revendication 6, **caractérisé en ce que,** concernant le rebord de raccordement, la surface de serrage de raccordement (93) et la surface d'étanchéité de raccordement (92) sont orientées dans la même direction et, concernant le rebord de l'échangeur de chaleur (10), la surface de serrage (39, 49, 59, 69, 79, 89) et la surface d'étanchéité (38, 48, 58, 68, 78, 88) sont orientées en convergeant l'une vers l'autre.

8. Système d'échangeur de chaleur (100) selon l'une des revendications 6 ou 7, **caractérisé en ce qu'**une épaisseur de matériau du rebord de raccordement est plus mince que celle du rebord de l'échangeur de chaleur.
